# EUROPÄISCHE PATENTANMELDUNG

(11) **EP 2 305 437 A1**
(43) Veröffentlichungstag der Anmeldung: **06.04.2011**
(21) Anmeldenummer: 09405173.7
(22) Anmeldetag: 01.10.2009
(51) Int. Cl.: B25J 5/04, B25J 9/00, B25J 9/02, B25J 19/06, B23Q 1/62

(54) **Industrieroboter mit Schutzvorrichtung**

(71) Anmelder: Güdel Group AG, 4900 Langenthal (CH)
(72) Erfinder: Frölich, Thomas, 4562 Biberist (CH); Perucca, Doriano, 4552 Derendingen (CH)
(74) Vertreter: Rüfenacht, Philipp Michael

(57) **Zusammenfassung**

Ein Industrieroboter umfasst einen verfahrbare Laufwagen (2, 22, 42, 52-1, 52-2), an welchem eine Arbeitsvorrichtung (3.1, 23.1, 43.1) vertikal beweglich gelagert und aus einem oberhalb einer Sicherheitsebene gelegenen ersten Bereich in einen unterhalb der Sicherheitsebene gelegenen zweiten Bereich absenkbar ist. Eine Schutzvorrichtung ist in der Sicherheitsebene angeordnet und hindert in einer ersten Stellung die Arbeitsvorrichtung (3.1, 23.1, 43.1) am Absenken vom ersten Bereich in den zweiten Bereich. In einer zweiten Stellung der Schutzvorrichtung ist das Absenken der Arbeitsvorrichtung (3.1, 23.1, 43.1) in den zweiten Bereich ermöglicht. Die Schutzvorrichtung ist am verfahrbaren Laufwagen (2, 22, 42, 52-1, 52-2) angebracht und der Arbeitsvorrichtung (3.1, 23.1, 43.1) zugeordnet, sodass mit einer einfachen Konstruktion der Schutz von Personen und Maschinen gewährleistet ist.

## Beschreibung

### Technisches Gebiet

Die Erfindung betrifft einen Industrieroboter mit einem verfahrbaren Laufwagen, an welchem eine Arbeitsvorrichtung vertikal beweglich gelagert und aus einem oberhalb einer Sicherheitsebene gelegenen ersten Bereich in einen unterhalb der Sicherheitsebene gelegenen zweiten Bereich absenkbar ist. Eine Schutzvorrichtung ist in einer ersten Stellung derart in der Sicherheitsebene positionierbar, dass die Arbeitsvorrichtung am Absenken in den zweiten Bereich gehindert ist. Die Schutzvorrichtung ist in eine zweite Stellung bewegbar, um der Arbeitsvorrichtung ein Absenken aus dem ersten Bereich in den zweiten Bereich zu ermöglichen

### Stand der Technik

In der Industrie bestehen breite Anwendungsmöglichkeiten für Industrieroboter, wie beispielsweise für Portalroboter bei Fertigungsstrassen in der Automobilindustrie, in Giessereien, beim Beladen von Werkzeugmaschinen, bei Schweissprozessen, beim Palettieren oder bei anderen Handhabungsaufgaben. Ein Portalroboter kann über einem Boden zwei parallel angeordnete Trägerbalken und eine dazu rechtwinklig angeordnete, auf den Trägerbalken horizontal bewegbare Trägerschiene umfassen. An der Trägerschiene kann an einem horizontal bewegbaren Laufwagen eine vertikal bewegbare Arbeitsvorrichtung angebracht sein. Mit einem solchen Portalroboter kann die Arbeitsvorrichtung an beliebige Stellen des durch die Trägerbalken und den Boden umschlossenen Raums gebracht werden.

Die Arbeitsvorrichtung weist die für die Anwendung notwendigen Einrichtungen auf, also z. B. einen Greifer zum Greifen von Automobilteilen oder eine Schweisseinrichtung zum Durchführen von Schweissprozessen. So kann beispielsweise ein Industrieroboter vorgesehen sein, um bestimmte Schweissaufgaben an mehreren, parallel laufenden Produktionslinien durchzuführen. Dazu kann die Arbeitsvorrichtung hochgezogen und über eine Stelle einer Produktionslinie gefahren werden. Dort kann die Arbeitsvorrichtung abgesenkt werden, die erforderliche Schweissaufgabe kann durchgeführt werden und danach kann die Arbeitsvorrichtung wieder hochgezogen werden, um diese an eine andere Stelle zu verfahren.

Der von einem Industrieroboter abgedeckte Raum (Produktionsbereich) kann sehr gross sein und eine Mehrzahl von Bearbeitungsmaschinen enthalten. Für Überwachungsaufgaben kann es erforderlich sein, diesen umschlossenen Raum während dem Betrieb des Industrieroboters zu betreten. Damit dies ohne Gefahr möglich ist, sind Sicherungsmassnahmen erforderlich, um zu verhindern, dass Personen durch Steuerungsfehler oder Maschinenausfälle zu Schaden kommen. Auch nur schon herunterfallende Kleinteile oder Öltropfen sind zu vermeiden. Zwar kann der Industrieroboter so gesteuert werden, dass die Arbeitsvorrichtung des Industrieroboters nur an ganz bestimmten Stellen abgesenkt wird. Allerdings kann eine Fehlfunktion einer solchen Steuerung fatale Folgen haben. Deshalb begeben sich Personen innerhalb des umschlossenen Raums in Gefahr, von der sich bewegenden Arbeitsvorrichtung berührt oder sogar verletzt zu werden.

Bei einem nur längs einer einzelnen Trägerschiene horizontal bewegbaren Laufwagen wird deshalb im Stand der Technik ein U-förmiger Kanal angeordnet, welcher an den Stellen, an welchen die Arbeitsvorrichtung abgesenkt werden muss, mit einem Schieber verschliessbare Öffnungen hat. Der Kanal und die Schieber sind dabei so massiv ausgeführt, dass bei geschlossenen Schiebern ein versehentliches Absenken der Arbeitsvorrichtung verhindert ist und so die Arbeitsvorrichtung gefahrlos oberhalb des U-förmigen Kanals verfahren werden kann. Personen können sich so im Raum unter dem U-förmigen Kanal gefahrlos bewegen. Dieser Raum ist zudem vor herabfallenden Kleinteilen oder Flüssigkeitstropfen geschützt.

Ein solcher U-förmiger Kanal muss allerdings massiv ausgeführt werden, was einen hohen konstruktiven Aufwand bedeutet. Zudem ist die Reinigung eines solchen Kanals aufwendig.

### Darstellung der Erfindung

Aufgabe der Erfindung ist es, einen dem eingangs genannten technischen Gebiet zugehörenden Industrieroboter mit einer Schutzvorrichtung zu schaffen, welche platzsparend und einfach gut reinigbar ist.

Die Lösung der Aufgabe ist durch die Merkmale des Anspruchs 1 definiert. Gemäss der Erfindung ist die Schutzvorrichtung am verfahrbaren Laufwagen des Industrieroboters angebracht und der Arbeitsvorrichtung des Industrieroboters zugeordnet.

Eine solche Schutzvorrichtung bewegt sich in Transportrichtung (d. h. quer zur Absenkrichtung) zusammen mit der Arbeitsvorrichtung und ist nicht fix am Trägerbalken eines Industrieroboters wie z. B. eines Portalroboters angebracht. Sie ist also mobil. Sind auf demselben Trägerbalken mehrere Laufwagen mit Arbeitsvorrichtungen angeordnet, die sich unabhängig voneinander verfahren lassen, dann kann an jedem Laufwagen eine separate Schutzvorrichtung angebracht sein.

Die Schutzvorrichtung ist kleiner und braucht nur auf das Abfangen einer einzigen Arbeitsvorrichtung ausgelegt zu werden. Sie kann entsprechend leichtgewichtig ausgeführt sein und lässt sich mit weniger Aufwand installieren. Die Schutzvorrichtung ist ausreichend stabil ausgeführt, sodass die Arbeitsvorrichtung auch bei einem Steuerungsfehler oder einem Ausfall der Energiezufuhr am Absenken in den zu schützenden Bereich gehindert ist. Die Schutzvorrichtung lässt sich schliesslich gan z einfach reinigen, da sie viel kleiner konstruiert ist und somit viel besser zugänglich ist als eine vorbekannte kanalförmige Schutzvorrichtung.

Eine erfindungsgemässe Schutzvorrichtung ist bevorzugt aus Blechen oder Platten aufgebaut, sodass Materialien wie Späne oder Flüssigkeiten gesammelt werden können. Eine solche Schutzvorrichtung dient gleichzeitig als Absenkschutz und als Tropfschutz. Alternativ ist die Schutzvorrichtung beispielsweise als Gitter ausgeführt und kann deshalb besonders leicht gebaut werden. Allerdings wirkt eine solche Schutzvorrichtung nur als Absenkschutz oder gegebenenfalls als Auffangschutz für grössere herunterfallende Teile.

Bevorzugt ist der Laufwagen an einem Horizontalträger angebracht und entlang des Horizontalträgers verfahrbar. Der Horizontalträger kann an seinen Enden je auf einem fest montierten Ständer angeordnet sein. Dadurch kann der Industrieroboter entlang einer Achse (deren Richtung durch den Horizontalträger definiert ist und z. B. als x-Achse bezeichnet werden kann) verfahren werden und es können Werkstücke, welche entlang einer Linie angeordnet sind, bearbeitet werden.

Alternativ kann der Horizontalträger anstatt auf fest montierten Ständern fixiert zu sein selber verfahrbar sein, beispielsweise indem die Ständer auf Schienen angebracht oder indem der Horizontalträger an seinen Enden auf je einem Querträger verfahrbar angebracht ist. Die Richtung der Querträger kann als y-Achse bezeichnet werden und die Arbeitsvorrichtung kann so in einem ganzen Raumbereich (x-y Ebene gebildet durch den Horizontalträger und die Querträger sowie z-Richtung gebildet durch die Absenkrichtung) verfahren bzw. positioniert werden.

Der Laufwagen, an welchem die Arbeitsvorrichtung angebracht ist, kann auch an einer Schiene gelagert sein, die eine Kreisbahn oder ganz allgemein eine Transportbahn beliebiger Linienführung bildet. Alternativ kann der Laufwagen auch an einem Ende eines Auslegearms oder am Ausleger eines Krans gelagert sein.

Vorzugsweise ist am Laufwagen (welcher z. B. ein Wagen mit Rollen ist) eine nach unten ragende Aufhängung vorgesehen, an welcher die Schutzvorrichtung drehbar gelagert ist. Dadurch kann mit einem kleinen konstruktiven Aufwand das Ausschwenken und Einschwenken der Schutzvorrichtung gewährleistet werden.

Alternativ ist die Schutzvorrichtung linear verschiebbar an der nach unten ragenden Aufhängung gelagert. Die Schutzvorrichtung kann insbesondere horizontal verschiebbar gelagert sein. Damit die Schutzvorrichtung von Materialien wie Späne und Flüssigkeitstropfen, welche sich im Betrieb in der Schutzvorrichtung sammeln können, gereinigt werden kann, ist ein Abstreifer vorgesehen. Bei einem Bearbeitungsschritt wird die Schutzvorrichtung gegenüber dem Abstreifer nur z.B. um 80% linear verschoben, sodass Materialien wie Späne und Flüssigkeitstropfen zurückbehalten werden. In einem Entleerungsschritt wird die Schutzvorrichtung um 100% linear verschoben und die Materialen werden durch den Abstreifer von der Schutzvorrichtung entfernt.

Vorzugsweise kann die Schutzvorrichtung in der ersten Stellung in eine erste Position gebracht werden, wobei Material, welches sich in der Schutzvorrichtung angesammelt hat, ausgeschüttet wird, und in eine zweite Position gebracht werden, wobei das angesammelte Material in der Schutzvorrichtung zurückgehalten wird. So können in der ersten Position, bei welcher eine Reinigung der Schutzvorrichtung durch ein Spülungssystem durchführbar ist, die angesammelten Materialien über eine Fläche und eine dem Boden zugewandten Kante der Schutzvorrichtung weggespült werden. In der zweiten Position, bei welcher eine Bearbeitung von Werkstücken freigegeben ist, können die in der Schutzvorrichtung angesammelten Materialien wie Späne oder Flüssigkeitstropfen von einer dem Boden zugewandten Wand zurückbehalten werden.

Die Schutzvorrichtung ist deshalb vorzugsweise asymmetrisch ausgebildet, um in der ersten Position Material auszuschütten und in der zweiten Position Material zurückzubehalten.

Bevorzugt ist die Schutzvorrichtung im Wesentlichen durch eine Wanne gebildet. Die Wanne kann einen geneigten Boden und geneigte Wände umfassen, sodass ein Behältnis gebildet wird, um Materialien wie Späne und/oder Flüssigkeiten in einer erforderten Menge aufnehmen zu können. Die Wanne und deren Wände können eingerichtet sein, dass bei einem Ausschwenken in eine erste Position die in der Wanne gesammelten Materialien auf den Boden ausgeschüttet werden und bei einem Ausschwenken in eine zweite Position in der Wanne gehalten werden.

Alternativ ist die Schutzvorrichtung im Wesentlichen durch eine Platte gebildet. Die Platte kann rechteckig sein und an drei der vier Ränder ein Bord oder kleinen Falz umfassen. Eine solche Platte kann ein kleines Gewicht aufweisen und bei Industrierobotern verwendet werden, bei welchen nur kleine Mengen Materialien wie Späne und/oder Flüssigkeiten anfallen.

Vorzugsweise ist eine Spülvorrichtung zur Spülung der Schutzvorrichtung angeordnet. Die Spülvorrichtung kann insbesondere eine Wasserdüse zum abspritzen der Schutzvorrichtung umfassen. Selbstverständlich kann das Wasser auf eine bestimmte Temperatur vorgeheizt sein. Dem Wasser können auch Lösungsmittel beigefügt sein. Das Wasser kann mit einem hohen Druck zur Wasserdüse geführt sein, sodass die Spülung effizienter durchgeführt werden kann. Die Spülvorrichtung kann als Waschstation an irgendeiner Stelle angeordnet sein, welche durch den verfahrbaren Laufwagen angefahren werden kann. So kann die Spülvorrichtung beispielsweise an einem der Enden eines Horizontalträgers, entlang welchem der Laufwagen verfahrbar ist, angeordnet sein. Die Waschstation ist vorzugsweise ausserhalb des Bereichs angeordnet, welcher im ordentlichen Arbeitsbetrieb von der Arbeitsvorrichtung angefahren werden muss.

Alternativ ist eine Reinigungsvorrichtung angeordnet, welche die Schutzvorrichtung mit Druckluft oder mit rotierenden Bürsten trocken reinigt. Dies hat den Vorteil, dass die Schutzvorrichtung vor Korrosion besser geschützt ist.

Bevorzugt kann die Schutzvorrichtung bei der Spülung oder Reinigung ausgeschwenkt werden. Bei einer asymmetrischen Schutzvorrichtung ist es insbesondere vorteilhaft die Schutzvorrichtung in diejenige Position auszuschwenken, bei welcher die Schutzvorrichtung entleert werden kann. Dies hat den Vorteil, dass die Schutzvorrichtung besonders effektiv gereinigt werden kann.

Vorzugsweise ist ein programmierbares Steuerungsmodul für den Industrieroboter vorgesehen, um die Arbeitsvorrichtung in den oberhalb der Sicherheitsebene gelegenen ersten Bereich hochzuziehen und die Schutzvorrichtung einzuschwenken, um die Arbeitsvorrichtung über eine Arbeitsstation zu verfahren, um die Schutzvorrichtung auszuschwenken, und um die Arbeitsvorrichtung in Richtung der Arbeitsstation abzusenken. Ein solcher Industrieroboter hat den Vorteil, dass dieser betrieben werden kann ohne Personen zu gefährden.

Alternativ können mechanische und/oder elektronische Mittel vorgesehen sein, wie beispielsweise ein längs am Horizontalträger angebrachtes mechanisches Profil, durch welche je nach Längsposition den Laufwagen beispielsweise ein Schalter ein- oder ausgeschaltet wird und dementsprechend das Hochziehen und Einschwenken der Schutzvorrichtung gesteuert wird. Das mechanische Profil kann entsprechend der Arbeitsstationen eingerichtet sein, womit sichergestellt werden kann, dass die Arbeitsvorrichtung zwischen den Arbeitsstationen stets hochgezogen und die Schutzvorrichtung eingeschwenkt ist. Dies hat den Vorteil, dass zwei unterschiedliche Systeme verwendet werden können für die Steuerung der Arbeitsaufgaben des Industrieroboters und die Steuerung der sicherheitsrelevanten Funktionen.

Bevorzugt sind akustische und/oder optische Mittel angeordnet, um Personen vor Bewegungen des Laufwagens, der Arbeitsvorrichtung und/oder der Schutzvorrichtung zu warnen. Die akustischen Mittel können einen Lautsprecher, ein Piezoelement oder eine Klingel umfassen, um ein Warnsignal zu erzeugen. Die optischen Mittel können eine Signallampe, insbesondere eine orangefarbige, drehende oder blinkende Signallampe, umfassen. Mit einem solchen Industrieroboter kann die Sicherheit zusätzlich verbessert werden.

Vorzugsweise ist mindestens je ein pneumatischer Antrieb und/oder mindestens ein elektrischer Antrieb für das Verfahren des Laufwagens respektive für das Einschwenken oder Ausschwenken der Schutzvorrichtung angeordnet. Ein solcher Industrieroboter hat insbesondere den Vorteil, dass bewährte und robuste Antriebe für das Verfahren des Laufwagens respektive für das Ein- und Ausschwenken der Schutzvorrichtung verwendet werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Teildarstellung eines Portalroboters gemäss dem Stand der Technik,
- Fig. 2: eine schematische Darstellung eines erfindungsgemässen Industrieroboters,
- Fig. 3a: eine Schutzvorrichtung in der ersten Stellung,
- Fig. 3b: die Schutzvorrichtung in der ersten Position der zweiten Stellung,
- Fig. 3c: die Schutzvorrichtung in der zweiten Position der zweiten Stellung,
- Fig. 4a: einen Industrieroboter mit einer Schutzvorrichtung in der ersten Position zweiten Stellung,
- Fig. 4b: einen Industrieroboter mit einer Schutzvorrichtung in der ersten Stellung, und
- Fig. 5: schematisch eine Anlage mit einem erfindungsgemässen Industrieroboter.

Grundsätzlich sind in den Figuren gleiche Teile mit gleichen Bezugszeichen versehen.

### Wege zur Ausführung der Erfindung

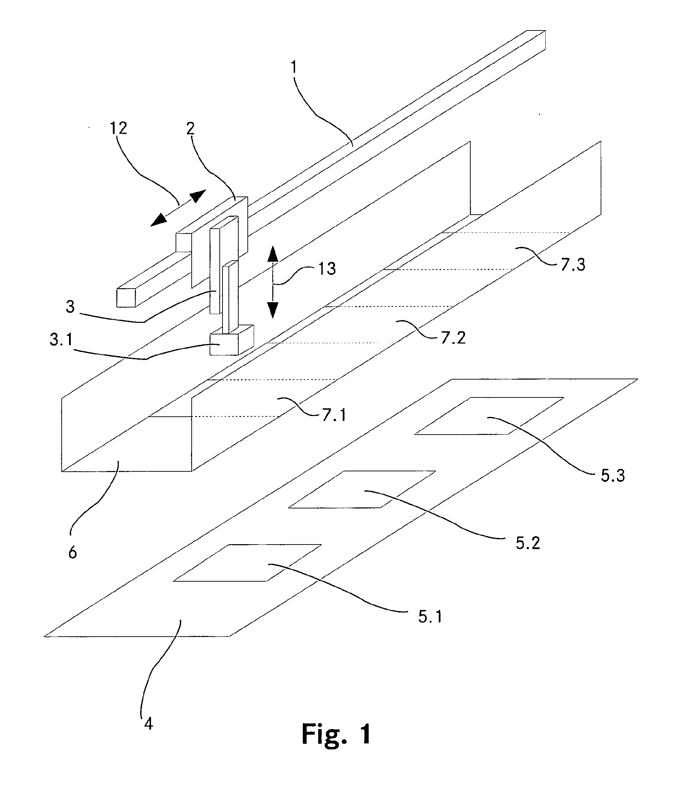

Figur 1 zeigt schematisch einen Ausschnitt eines Portalroboters gemäss dem Stand der Technik. Der Horizontalträger 1 ist an seinen Enden aufgehängt (nicht gezeichnet), beispielsweise indem an den Enden des Horizontalträgers 1 ein entsprechender Ständer angebracht ist, sodass der Horizontalträger 1 im Wesentlichen horizontal über einem Boden angeordnet ist. Am Horizontalträger 1 ist ein verfahrbarer Laufwagen 2 angebracht. Der Laufwagen 2 kann beispielsweise Rollen oder Räder umfassen, welche mit dem Horizontalträger 1 zusammenwirken und wodurch eine horizontale Bewegung des Laufwagens 2 entlang dem Horizontalträger 1 ermöglicht ist. In Figur 1 ist diese horizontale Verfahrbarkeit des Laufwagens 2 mit Pfeilen als Horizontalverschiebung 12 angedeutet. Als Antrieb kann beispielsweise ein Elektromotor oder ein pneumatischer Antrieb eingesetzt werden (nicht gezeichnet).

Wie in Figur 1 skizziert, ist am Laufwagen 2 eine Vertikalachse 3 mit einer Arbeitsvorrichtung 3.1 angebracht. Die Vertikalachse 3 ist eingerichtet, um die Arbeitsvorrichtung in vertikaler Richtung anzuheben oder abzusenken. So kann die Vertikalachse 3 beispielsweise eine oder mehrere Profilrohre mit einer Zahnstange umfassen, welche mit Zahnrädern zusammenwirken, sodass die an einem Profilrohrende angebrachte Arbeitsvorrichtung 3.1 durch die Drehung der Zahnräder angehoben oder abgesenkt wird. Ein Beispiel für eine Vertikalachse mit zusätzlicher Sicherung zeigt die EP 1 354 665 B1.

In Figur 1 ist eine Bearbeitungsbasis 4 dargestellt, welche beispielsweise durch den Boden einer Werkstatt oder durch eine Tischplatte gebildet sein kann. Wie in Figur 1 skizziert, befinden sich in der Ebene der Bearbeitungsbasis 4 verschiedene Arbeitsstationen 5.1, 5.2, 5.3. Die Arbeitsstationen 5.1, 5.2, 5.3 sind eingerichtet, um Werkstücke wie beispielsweise in der Autoindustrie hergestellte Motoren- oder Chassisteile zur Bearbeitung aufzunehmen. In den Arbeitsstationen 5.1, 5.2, 5.3 können Bearbeitungswerkzeuge angeordnet sein und die Arbeitsvorrichtung 3.1 kann eingerichtet sein, um ein Werkstück zu greifen, wobei durch die Verschiebung des Laufwagens 2 entlang dem Horizontalträger 1 das Werkstück zwischen den Arbeitsstationen transportiert werden kann. So kann in einer ersten Arbeitsstation 5.1 ein Fliessband angeordnet sein, um Werkstücke zum erfindungsgemässen Industrieroboter hinzuführen. Durch das Absenken der Arbeitsvorrichtung 3.1 zur ersten Arbeitsstation 5.1 kann ein Werkstück gefasst werden und zur zweiten Arbeitsstation 5.2 geführt werden. In der zweiten Arbeitsstation 5.2 können Bearbeitungswerkzeuge wie Bohrwerkzeuge, Fräswerkzeuge, Schweisswerkzeuge, Lötwerkzeuge, Kühlmittel oder irgendwelche anderen Einrichtungen angeordnet sein, um das Werkstück zu bearbeiten. Nach der Bearbeitung kann das Werkstück mit der Arbeitsvorrichtung 3.1 gefasst werden und zur dritten Arbeitsstation 5.3 geführt werden. Bei der dritten Arbeitsstation 5.3 kann ein weiteres Fliessband angeordnet sein, um bearbeitete Werkstücke weiterzutransportieren.

Alternativ können die Werkstücke beispielsweise auf drei parallelen Fliessbändern, welche in einem Winkel von 90° zum Horizontalträger 1 angeordnet sein, sodass Werkstücke auf den Fliessbändern automatisiert den Arbeitsstationen 5.1, 5.2, 5.3 zugeführt und wieder weggeführt werden können. Die Arbeitsvorrichtung 3.1 kann dabei alle notwendigen Einrichtungen und Mittel umfassen, um die erwünschte Bearbeitung eines Werkstücks durchzuführen. Solche Einrichtungen und Mittel können Bohrwerkzeuge, Fräswerkzeuge, Schweisswerkzeuge, Lötwerkzeuge, Kühlmittel oder irgendwelche anderen Einrichtungen oder Mittel umfassen. So kann beispielsweise ein Werkstück auf einem Fliessband zu einer Arbeitsstation 5.1, 5.2, 5.3 geführt werden. Die Arbeitsstation kann eine Halterung umfassen, welche ein Werkstück vom Fliessband aufnimmt und haltert. Sobald ein Werkstück in der Halterung gehaltert ist, wird die Arbeitsvorrichtung 3.1 abgesenkt und das Werkstück wird mit einem Werkzeug der Arbeitsvorrichtung 3.1 bearbeitet. Die Halterung der Arbeitsstation ist weiter eingerichtet, um das Werkstück nach der Bearbeitung wieder auf das Fliessband zu stellen.

Wie in Figur 1 skizziert ist in einer Ebene zwischen dem Horizontalträger 1 und der Bearbeitungsbasis 4 eine Rinne 6 angeordnet. Die Rinne 6 umfasst verschliessbare Schächte 7.1, 7.2, 7.3. Je ein verschliessbarer Schacht 7.1, 7.2, 7.3 ist einer Arbeitsstation 5.1, 5.2, 5.3 zugeordnet. Die Rinne 6 kann auf einer Höhe von 220 cm angeordnet sein, damit Personen bequem unten durch gehen können, und kann 80 cm breit und ebenso hoch sein. Die Rinne 6 ist durchschlagsicher gegen herunterfallende Teile oder gegen das unbeabsichtigte Absenken der Arbeitsvorrichtung 3.1. Mit einer solchen Rinne wird gewährleistet, dass Personen, welche sich beispielsweise für Kontrollaufgaben in der Nähe oder zwischen den Arbeitsstationen befinden, vor herunterfallenden Teilen geschützt sind. Von der Arbeitsvorrichtung 3.1 können nach der Bearbeitung eines Werkstücks verschiedene Späne oder Flüssigkeitsreste von Kühlmitteln haften bleiben. Bei der Verschiebung der Arbeitsvorrichtung 3.1 oberhalb der Rinne 6 können diese Späne oder Flüssigkeitsreste herunterfallen bzw. heruntertropfen. Die Rinne 6 muss deshalb flüssigkeitsdicht sein, sodass für Reinigungszwecke die Rinne 6 ausgespült werden kann.

Durch die Rinne 6 wird eine Sicherheitsebene definiert, wobei die Arbeitsvorrichtung 3.1 in einem ersten Bereich oberhalb der Sicherheitsebene entlang dem Horizontalträger 1 verfahrbar ist und wobei die Arbeitsvorrichtung nach dem Öffnen eines Schachts 7.1, 7.2, 7.3 in einen zweiten Bereich unterhalb der Sicherheitsebene absenkbar ist. Die in der Sicherheitsebene angeordnete Rinne 6 bewirkt einen umfassenden Schutz von Personen und Maschinen, welche sich im zweiten Bereich unter der Sicherheitsebene befinden.

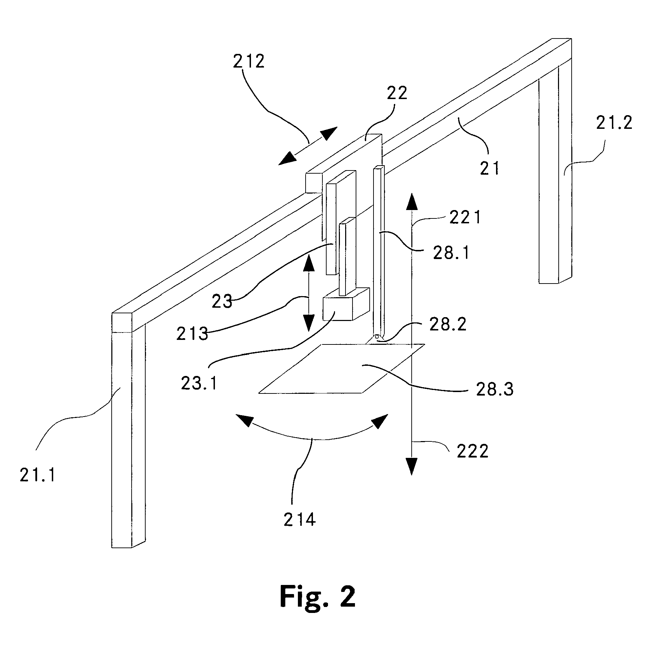

Figur 2 zeigt schematisch einen Teilausschnitt eines erfindungsgemässen Industrieroboters. Ein Horizontalträger 21 ist an seinen Enden abgestützt, beispielsweise durch entsprechende Ständer 21.1, 21.2. Der Horizontalträger 21 kann beispielsweise über einem Boden einer Werkstatt angeordnet sein. Der Abstand zwischen dem Horizontalträger 21 und dem Boden kann beispielsweise zwischen 250 cm und 280 cm betragen. Am Horizontalträger 21 ist ein verfahrbarer Laufwagen 22 angebracht. Der Laufwagen 22 kann Rollen oder Räder umfassen, welche auf dem Horizontalträger 21 abgestützt sind und eingerichtet sind, um den Laufwagen 22 entlang dem Horizontalträger 21 horizontal zu verfahren. Dazu können am Laufwagen 22 oder am Horizontalträger 21 geeignete Antriebe, wie beispielsweise ein Elektroantrieb oder ein pneumatischer Antrieb angebracht sein (nicht gezeichnet).

Am Laufwagen 22 ist eine Vertikalachse 23 angebracht, um eine Arbeitsvorrichtung 23.1 abzusenken oder anzuheben. Die Vertikalachse 23 kann gemäss dem Stand der Technik ausgeführt sein und beispielsweise aus einer oder mehreren gegenüber dem Laufwagen 22 verschiebbaren Stangen, aus Profilen oder aus Platten gebildet sein. Der Antrieb der Vertikalachse kann wiederum elektrisch oder pneumatisch erfolgen (nicht gezeichnet). Wie in Figur 2 skizziert, ist am Laufwagen 22 eine Schutzvorrichtung bestehend aus einer Schutzplatte 28.3, einer Drehachse 28.2 und einer Aufhängung 28.1 angeordnet. Die Aufhängung 28.1 ist an ihrem einen Ende mit dem Laufwagen 22 fest verbunden, beispielsweise mit Schraubverbindungen. Am anderen Ende der Aufhängung 28.1 ist eine Drehachse 28.2 angebracht, welche eine Schutzplatte 28.3 trägt. Durch einen Antrieb (nicht gezeichnet) kann die Schutzplatte 28.3 um die Drehachse 28.2 gedreht werden und somit entsprechend der Drehrichtung 214 unterhalb der Arbeitsvorrichtung 23.1 eingeschwenkt oder ausgeschwenkt werden. In Figur 2 ist die Schutzplatte 28.3 in der ersten, eingeschwenkten Stellung skizziert, wodurch eine Sicherheitsebene definiert ist. In dieser ersten Stellung ist die Arbeitsvorrichtung 23.1 daran gehindert, vom oberhalb der Sicherheitsebene ersten Bereich 221 in den unterhalb der Sicherheitsebene gelegenen zweiten Bereich 222 abgesenkt zu werden. Die Schutzvorrichtung bestehend aus der Schutzplatte 28.3, der Drehachse 28.2 und der Aufhängung 28.1 kann so dimensioniert sein, dass diese durchbruchsicher ist und im eingeschwenkten Zustand das Absenken der Arbeitsvorrichtung 23.1 verhindert wird. Die Schutzplatte 28.3 ist vorzugsweise wannenförmig ausgestaltet, sodass von der Arbeitsvorrichtung 23.1 herabfallende Späne oder herabtropfenden Flüssigkeiten in der wannenförmigen Schutzplatte 28.3 gesammelt werden.

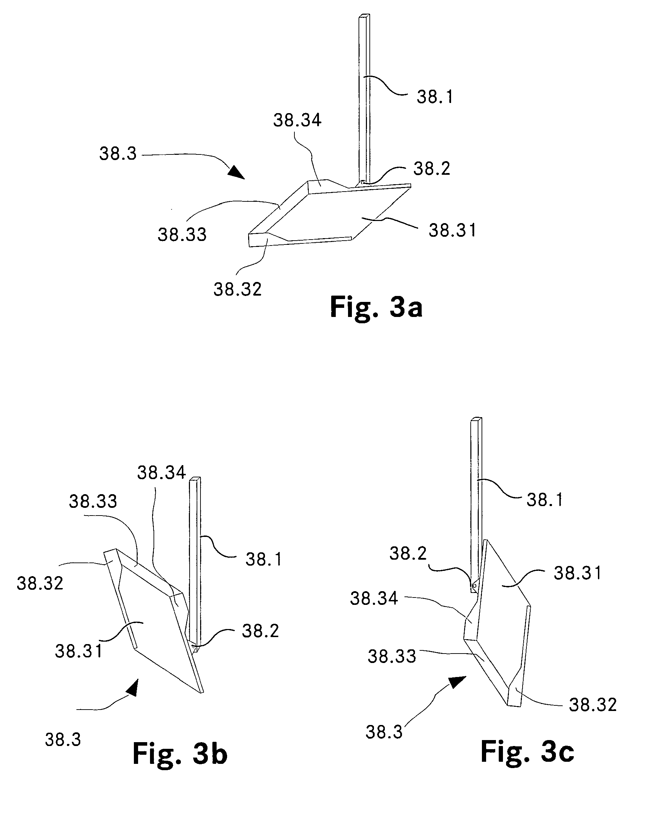

Figur 3a zeigt eine wannenförmige Schutzplatte 38.3 in einer ersten, eingeschwenkten Stellung. Die wannenförmige Schutzplatte 38.3 kann wie in Figur 3a skizziert einen Boden 38.31 umfassen. Am Rand des Bodens 38.31 sind auf drei Seiten drei Wände 38.32, 38.33, 38.34 angebracht. An der vierten Seite des Randes des Bodens ist keine Wand angebracht. Die drei Wände 38.32, 38.33, 38.34 können wie in Figur 3a skizziert unterschiedlich hoch sein, sodass auf der einen Seite des Bodens 38.31 eine höhere Wand 38.33 angebracht ist. Wie in Figur 3a skizziert kann der Boden der Schutzplatte 38.3 in der ersten, eingeschwenkten Stellung leicht zur höheren Wand 38.33 geneigt sein. Durch diese Neigung werden Späne oder Flüssigkeitstropfen welche von der Schutzplatte 38.3 aufgenommen werden, zur höheren Wand 38.33 geführt und fallen nicht über den Rand des Bodens der Schutzplatte 38.3, bei welchem keine Wand angebracht ist, herunter. Eine solche wannenförmige Schutzplatte 38.3 ist asymmetrisch aufgebaut.

In Figur 3b ist die Schutzplatte 38.3 in einer ersten Position der ausgeschwenkten Stellung skizziert. In dieser ersten ausgeschwenkten Position ist keine Wand 38.32, 38.33, 38.34 der Schutzplatte 38.3 dem Boden zugewendet. Dadurch fallen Späne und Flüssigkeitstropfen, welche sich auf der Schutzplatte 38.3 angesammelt haben, auf den Werkstattboden herunter. In dieser Position kann die wannenförmige Schutzplatte 38.3 mit einer Spüleinrichtung besonders einfach und gründlich gereinigt werden, indem insbesondere der Boden 38.31 mit einem Wasserstrahl und/oder mit Bürsten gereinigt wird.

In Figur 3c ist die Schutzplatte 38.3 in einer zweiten Position der ausgeschwenkten Stellung skizziert. In dieser zweiten ausgeschwenkten Position ist eine hohe Wand der Schutzplatte 38.3 dem Boden zugewendet. Durch diese hohe Wand werden Späne und Flüssigkeitstropfen, welche sich auf der Schutzplatte 38.3 angesammelt haben, gehalten und fallen nicht auf den Boden herunter. Diese Position ist dazu geeignet, um die Arbeitsvorrichtung mit der Vertikalachse über einer Arbeitsstation abzusenken und dabei sicherzustellen, dass auf der Schutzplatte 38.3 angesammelte Späne und Flüssigkeiten nicht auf Arbeitsstationen herunterfallen oder -tropfen.

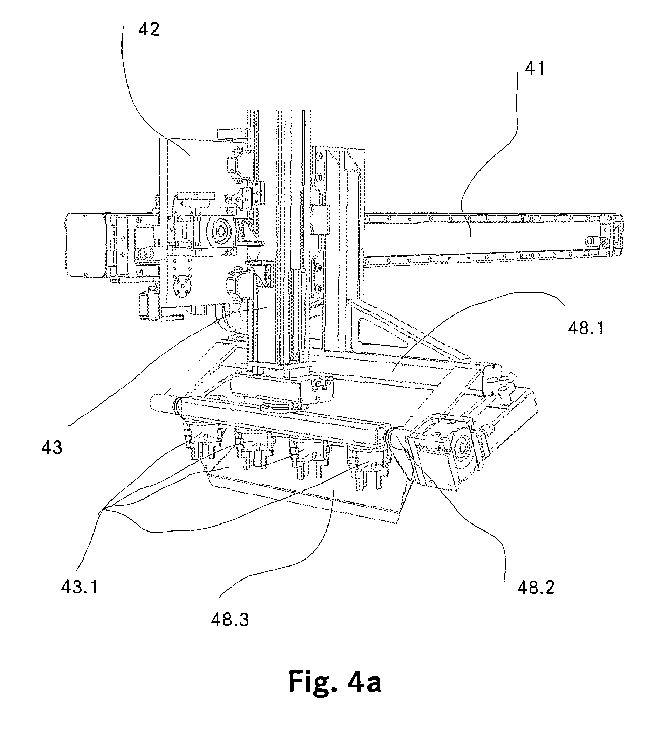

In Figur 4a ist eine Ausführungsvariante eines erfindungsgemässen Industrieroboters dargestellt. Ein Horizontalträger 41 ist beispielsweise horizontal über dem Boden einer Werkstatt angeordnet. Der Horizontalträger 41 kann beispielsweise auf entsprechenden Ständern fest montiert sein. Der Horizontalträger 41 kann alternativ auf entsprechenden Querträgern montiert sein, und zwar so, dass der Horizontalträger 41 entlang dieser Querträger verfahren werden kann. Wie in Figur 4a dargestellt, ist am Horizontalträger 41 ein Laufwagen 42 angebracht. Der Laufwagen 42 kann Elektromotoren oder pneumatische Antriebe umfassen, um den Laufwagen 42 entlang dem Horizontalträger 41 zu verfahren. Der Laufwagen 42 kann somit parallel zur durch den Laufwagen 42 gebildeten Achse oder alternativ parallel zur durch den Laufwagen 42 und die Querträger gebildeten Ebene verfahren werden.

Wie in Figur 4a dargestellt, ist am Laufwagen 42 eine Vertikalachse 43 angebracht. Die Vertikalachse 43 kann beispielsweise eine Zahnstange umfassen, welche mit am Laufwagen 42 angebrachten Zahnrädern zusammenwirken und so eine vertikale Bewegung der Vertikalachse 43 ermöglicht ist. Die Zahnräder können durch einen elektrischen oder pneumatischen Antrieb angetrieben werden. An einem Ende der Vertikalachse 43 ist eine Arbeitsvorrichtung 43.1 angebracht. Wie in Figur 4a dargestellt, kann die Arbeitsvorrichtung 43.1 mehrere Werkzeuge umfassen. Die Arbeitsvorrichtung 43.1 kann beispielsweise 3-Backen Greifer oder irgendeine andere Greifvorrichtung umfassen, um Einzelteile zu greifen und wieder freizugeben. So können mit einem 3-Backen Greifer insbesondere Scheibenteile gegriffen oder freigegeben werden, indem der 3-Backen Greifer von Innen in eine Öffnung wie eine Bohrung des Scheibenteils greift. Andererseits kann die Arbeitsvorrichtung 43.1 beispielsweise eingerichtet sein, um bei einem 4-Zylinder Automotor einen Bearbeitungsschritt wie beispielsweise das Reinigen der Zylinderinnenflächen für die 4 Zylinder gleichzeitig durchzuführen. Selbstverständlich kann die Arbeitsvorrichtung 43.1 eine beliebige Anzahl identischer oder unterschiedlicher Werkzeuge umfassen.

Wie in Figur 4a dargestellt, ist am Laufwagen 42 eine Aufhängung 48.1 befestigt. Die Aufhängung 48.1 kann beispielsweise aus Hohlprofilen hergestellt sein. An der Aufhängung 48.1 ist eine Drehachse 48.2 angebracht. An der Drehachse 48.2 ist eine Schutzplatte 48.3 angebracht. Die Schutzplatte 48.3 kann um die Drehachse 48.2 mittels eines Antriebs in unterschiedliche Stellungen geschwenkt werden. In Figur 4a ist die Schutzplatte 48.3 in einer ausgeschwenkten Stellung dargestellt, sodass die Arbeitsvorrichtung 43.1 zur Bearbeitung eines Werkstücks freigegeben ist und abgesenkt werden kann.

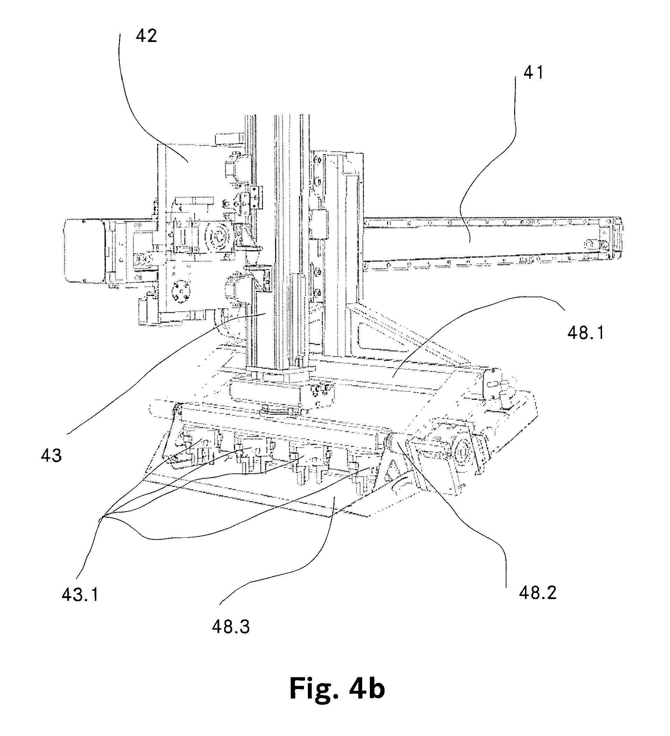

In Figur 4b ist die Schutzplatte 48.3 in einer ersten, eingeschwenkten Stellung dargestellt, sodass die Arbeitsvorrichtung 43.1 nicht abgesenkt werden kann und insbesondere Späne oder Flüssigkeitstropfen, welche an der Arbeitsvorrichtung 43.1 haften und herunterfallen können, in der Schutzplatte 48.3 gesammelt werden.

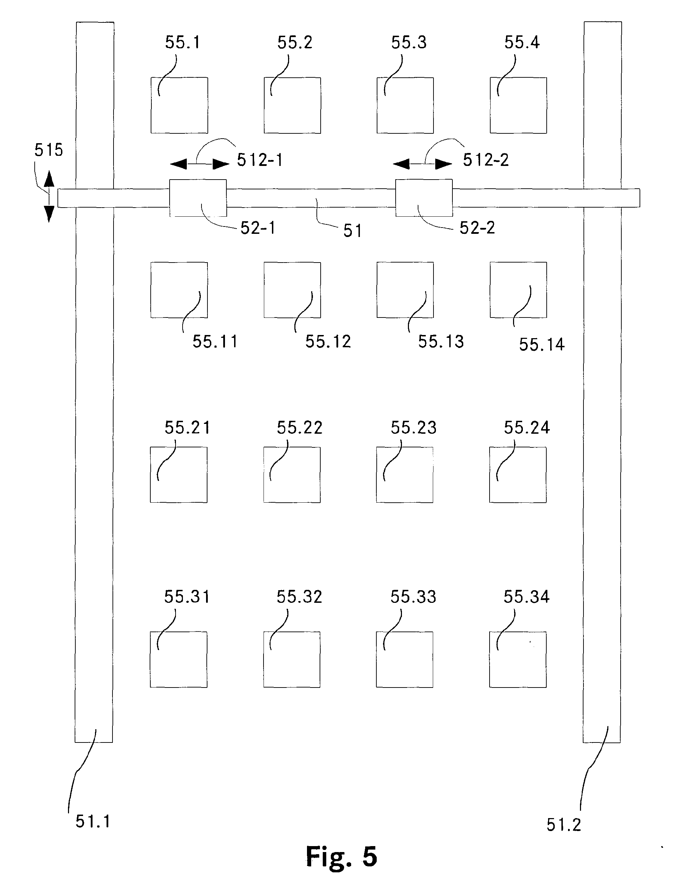

Figur 5 zeigt schematisch die Aufsicht auf eine Anlage mit einem erfindungsgemässen Industrieroboter. Die in Figur 5 skizzierte Anlage umfasst insgesamt sechzehn Arbeitsstationen 55.1, 55.2, 55.3, ... 55.34. Selbstverständlich können Anlagen mit mehr oder weniger Arbeitsstationen 55.1, ..., 55.34 gebaut werden. Die Anlage umfasst zwei Querträger 52.1, 52.2, welche über dem Boden einer Werkstatt angebracht sind. Auf den Querträgern 52.1, 52.2 ist ein Horizontalträger 51 angebracht, welcher auf den Querträgern 52.1, 52.2 in den Querverschiebungsrichtungen 515 verfahrbar ist. Am Horizontalträger 51 sind zwei Laufwagen 52-1, 52-2 angebracht, welche entlang dem Horizontalträger in den Horizontalverschiebungsrichtungen 512-1, 512-2 verfahrbar sind. Je nach Grösse der Anlage können selbstverständlich eine beliebige Anzahl von Laufwagen am Horizontalträger 51 angebracht sein. Die Laufwagen 52-1, 52-2 können Mittel umfassen, um ein versehentliches Zusammenstossen zu verhindern oder zumindest zu dämpfen. An jeder der Laufwagen 52-1, 52-2 sind wie oben dargestellt eine Vertikalachse mit einer Arbeitsvorrichtung sowie eine Schutzvorrichtung mit einer Aufhängung, einer Drehachse und einer Schutzplatte angebracht. Durch eine entsprechende Querverschiebung des Horizontalträgers 51 und eine Horizontalverschiebung des Laufwagens 52-1 kann eine Arbeitsvorrichtung beispielsweise über eine Arbeitsstation 55.1 verfahren werden. Die Schutzplatte kann ausgeschwenkt werden und die Arbeitsvorrichtung kann in Richtung der Arbeitsstation abgesenkt werden, um beispielsweise ein Werkstück zu fassen oder zu bearbeiten. Gleichzeitig kann auch der Laufwagen 52-2 über die Arbeitsstation 55.3 verfahren werden, um ein analoges Absenken einer Arbeitsvorrichtung durchzuführen. Danach können die Arbeitsvorrichtungen angehoben werden und durch ein Verfahren der Laufwagen 52-1, 52-2 und/oder ein Verfahren des Horizontalträgers 51 können die Arbeitsvorrichtung über anderen Arbeitstationen, beispielsweise über den Arbeitsstationen 55.12 und 55.14 verfahren werden. Mit einer solchen Anlage können die Arbeitsstationen 55.1, ..., 55.34 mit Werkstücken versorgt werden und es kann eine effiziente Bearbeitung von Werkstücken erfolgen, bei einem gleichzeitigen optimalen Schutz und Sicherheit von Personen, welche sich im Bereich zwischen den Arbeitsstationen 55.1, ..., 55.34 aufhalten oder bewegen.

Alternativ kann die Aufhängung 28.1 zusammen mit der Schutzplatte 28.3 und der Drehachse 28.2 statt am Laufwagen 22 direkt oberhalb der Arbeitsvorrichtung 23.1 angebracht sein. Dies hat zur Folge, dass die Schutzplatte 28.3 gleichzeitig mit der Arbeitsvorrichtung 23.1 abgesenkt oder angehoben wird. Die Schutzplatte 28.3 kann dabei vor dem Absenken ausgeschwenkt werden, sodass die Arbeitsvorrichtung 23.1 zur Aufnahme oder zum Bearbeitung eines Werkstücks verwendet werden kann. Nach der Aufnahme oder Bearbeitung des Werkstücks kann die Arbeitsvorrichtung 23.1 angehoben und die Schutzplatte 28.3 eingeschwenkt werden. Späne und Flüssigkeitsreste, welche sich von der Arbeitsvorrichtung 23.1 lösen, können so von der Schutzplatte 28.3 aufgenommen werden. Um Personen zu schützen, muss in diesem Fall allerdings eine Sicherheits-Steuerung im Zusammenhang mit einer redundanten Sicherheitsbremse wie beispielsweise gemäss der EP 1 354 665 B1 (Güdel Group AG) eingesetzt werden. Damit wird sichergestellt, dass kein unbeabsichtigtes Absenken der Arbeitsvorrichtung 23.1 stattfinden kann. Ausführung und periodische Funktionsprüfung müssen die Standards der ISO 13849-1 erfüllen und müssen entsprechende Performance-Levels erreichen.

Statt einer Anlage gemäss Figur 5 kann auch ein Schienensystem vorgesehen sein, welches oberhalb von Arbeitsstationen angeordnet ist und das Verfahren eines Laufwagens mit angebrachter Arbeits- und Schutzvorrichtung oberhalb der Arbeitsstationen ermöglicht. Ein solches Schienensystem kann insbesondere beliebige Kurven, Biegungen und/oder Weichen umfassen, sodass ein schnelles und effizientes Verfahren des Laufwagens ermöglicht ist.

Zusammenfassend ist festzustellen, dass durch die Erfindung ein Industrieroboter mit einer Schutzvorrichtung geschaffen ist, wobei ein kleiner konstruktiver Aufwand notwendig ist und die Schutzvorrichtung einfach gereinigt werden kann.

## Patentansprüche

1. Industrieroboter mit einem verfahrbaren Laufwagen (2, 22, 42, 52-1, 52-2), an welchem eine Arbeitsvorrichtung (3.1, 23.1, 43.1) vertikal beweglich gelagert und aus einem oberhalb einer Sicherheitsebene gelegenen ersten Bereich in einen unterhalb der Sicherheitsebene gelegenen zweiten Bereich absenkbar ist, wobei eine Schutzvorrichtung in einer ersten Stellung derart in der Sicherheitsebene positionierbar ist, dass die Arbeitsvorrichtung (3.1, 23.1, 43.1) am Absenken in den zweiten Bereich gehindert ist und wobei die Schutzvorrichtung in eine zweite Stellung bewegbar ist, um der Arbeitsvorrichtung (3.1, 23.1, 43.1) ein Absenken aus dem ersten Bereich in den zweiten Bereich zu ermöglichen, **dadurch gekennzeichnet, dass** die Schutzvorrichtung am verfahrbaren Laufwagen (2, 22, 42, 52-1, 52-2) angebracht und der Arbeitsvorrichtung (3.1, 23.1, 43.1) zugeordnet ist.

2. Industrieroboter nach Anspruch 1, **dadurch gekennzeichnet, dass** der Laufwagen (2, 22, 42, 52-1, 52-2) an einem Horizontalträger (1, 21, 41, 51) angebracht ist und entlang des Horizontalträgers verfahrbar ist.

3. Industrieroboter nach einem der Ansprüche 1 bis 2, **dadurch gekennzeichnet, dass** am Laufwagen (2, 22, 42, 52-1, 52-2) eine Aufhängung (28.1, 38.1, 48.1) angeordnet ist, an welcher die Schutzvorrichtung an einer Drehachse drehbar gelagert ist.

4. Industrieroboter nach einem der Ansprüche 1 bis 3, **dadurch gekennzeichnet, dass** die Schutzvorrichtung asymmetrisch ausgebildet ist und in der zweiten Stellung in eine erste Position gebracht werden kann, wobei Material, welches sich in der Schutzvorrichtung angesammelt hat, ausgeschüttet wird, und in eine zweite Position gebracht werden kann, wobei das angesammelte Material in der Schutzvorrichtung gehalten wird.

5. Industrieroboter nach einem der Ansprüche 1 bis 4, **dadurch gekennzeichnet, dass** die Schutzvorrichtung im Wesentlichen durch eine Wanne gebildet ist.

6. Industrieroboter nach einem der Ansprüche 1 bis 5, **dadurch gekennzeichnet, dass** eine Spülvorrichtung zur Spülung der Schutzvorrichtung angeordnet ist.

7. Industrieroboter nach Anspruch 6, **dadurch gekennzeichnet, dass** die Schutzvorrichtung bei der Spülung ausgeschwenkt werden kann.

8. Industrieroboter nach einem der Ansprüche 1 bis 7, **dadurch gekennzeichnet, dass** dieser eingerichtet ist, um die Arbeitsvorrichtung (3.1, 23.1, 43.1) in den oberhalb der Sicherheitsebene gelegenen ersten Bereich hochzuziehen und die Schutzvorrichtung einzuschwenken, um die Arbeitsvorrichtung (3.1, 23.1, 43.1) über eine Arbeitsstation zu verfahren, um die Schutzvorrichtung auszuschwenken, und um die Arbeitsvorrichtung (3.1, 23.1, 43.1) in Richtung der Arbeitsstation (5.1, 5.2, 5.3, 5.4, 55.1, ..., 55.34) abzusenken.

9. Industrieroboter nach einem der Ansprüche 1 bis 8, **dadurch gekennzeichnet, dass** akustische und/oder optische Mittel angeordnet sind, um Personen vor Bewegungen des Laufwagens (2, 22, 42, 52-1, 52-2), der Arbeitsvorrichtung (3.1, 23.1, 43.1) und/oder der Schutzvorrichtung zu warnen.

10. Industrieroboter nach einem der Ansprüche 1 bis 9, **dadurch gekennzeichnet, dass** mindestens ein pneumatischer Antrieb und/oder mindestens ein elektrischer Antrieb für das Verfahren des Laufwagens (2, 22, 42, 52-1, 52-2) respektive für das Einschwenken oder Ausschwenken der Schutzvorrichtung angeordnet ist.
